# EUROPEAN PATENT APPLICATION

(11) **EP 2 789 929 A1**
(43) Date of publication of application: **15.10.2014**
(21) Application number: 12856373.1
(22) Date of filing: 06.12.2012
(51) Int. Cl.: F24J 2/14

(54) **SOLAR HEAT COLLECTION DEVICE**

(30) Priority: 06.12.2011 JP 2011266905
(71) Applicant: Toyota Jidosha Kabushiki Kaisha, Toyota-shi, Aichi 471-8571 (JP)
(72) Inventor: TAKASHIMA, Tasuku, Kariya-shi, Aichi 448-8671 (JP); NORITAKE, Kazuto, Kariya-shi, Aichi 448-8671 (JP); HAYASHI, Hirohito, Kariya-shi, Aichi 448-8671 (JP); SATO, Akinori, Toyota-shi, Aichi-ken, 471-8571 (JP)
(74) Representative: Intès, Didier Gérard André
(86) International application number: PCT/JP2012/081680
(87) International publication number: WO 2013/085001

(57) **Abstract**

A trough type solar thermal collector which uses a curved mirror to make a heat tube which is arranged in the front of the curved mirror collect sunlight and to heat a fluid which flows through the inside of the heat tube, the trough type solar thermal collector configured to be able to avoid damage to the curved mirror due to vortex-induced vibration, is provided. The trough type solar thermal collection apparatus of the present invention is provided with, at an outer edge of the curved mirror in the direction of change of curvature of the curved shape of the curved mirror, vortex control means for controlling the flow of vortices which forms at the outer edge, whereby it is possible to avoid damage to the curved mirror such as occurs due to vortex-induced vibration at the time when higher windspeed resistance specifications are sought from the apparatus.

## Description

### Technical Field

The present invention relates to a solar thermal collector, more particularly relates to a trough type solar thermal collector which uses a curved mirror to make a heat tube which is arranged at the front of the curved mirror collect sunlight and to heat a fluid which flows through the heat tube.

### Background Art

In such a trough type solar thermal collector, since it is necessary to efficiently collect as much energy as possible, for the heat collector, a system in which a high heat collection efficiency parabolic mirror is used as the curved mirror and a heat tube is attached at the position of the focal line of the parabolic mirror is known.

### Citation List

### Patent Literature

PLT 1: Japanese Patent Publication No. 2000-208803A

### Summary of Invention

### Technical Problem

In this regard, when arranging a structure in a fluid flow, Karma vortices or other vortices occur at the backflow side. The vortex-induced vibration which is caused by the vortices can sometimes cause damage to the structure. For example, when the frequency of generation of the vortices is close to the natural frequency of the structure, resonance occurs and the structure can be damaged in some cases.

Damage due to such vortex-induced vibration can occur in the above such trough type solar thermal collector as well. That is, in the curved mirror of a trough type solar thermal collector, generally, the cross-sectional shape in the direction of change of curvature of the curved shape of the curved mirror is formed to be uniform. Further, the top and bottom edges in the direction of change of curvature of the curved shape of the curved mirror are formed to be straight. Therefore, when a strong wind is blowing, large sized vortices easily form at the top and bottom edges in the direction of change of curvature of the curved shape of the curved mirror, so sometimes the curved mirror is damaged due to the vortex-induced vibration due to the vortices which form at the top and bottom edges.

In recent years, various environmental initiatives have been advanced. Among these, along with the development of solar cell modules such as disclosed in PLT 1, development of solar thermal collectors has also come under the spotlight. For realistic commercialization of solar thermal collectors, much higher performance is being sought in the specifications of such apparatuses, for example, the windspeed resistance, apparatus life, and other specifications, compared with the specifications of the prior art. Therefore, while damage of the curved mirror due to the above-mentioned vortex-induced vibration had never been considered a problem in past windspeed resistance specifications, a need has arisen for taking sufficient action under the high windspeed resistance conditions of the high performance specifications sought. Due to this, in the above-mentioned trough type solar thermal collector, there has been a desire to provide vortex control means which are able to control the flow of vortices which can form at the top and bottom edges in the direction of change of curvature of the curved shape of the curved mirror.

The present invention was made in consideration of the above problem and has as its object the provision of a trough type solar thermal collector which uses a curved mirror to make a heat tube which is arranged in front of the curved mirror collect sunlight and to heat a fluid which flows through the heat tube and which is provided with vortex control means which can control the flow of vortices which can form at the top and bottom edges of the curved mirror in the direction of change of the curvature of the curved surface, so even when a higher windspeed resistance specification is demanded from the apparatus, damage to the curved mirror due to vortex-induced vibration can be avoided.

Note that in the apparatus which is disclosed in PLT 1, it is disclosed that provision is made of zigzag bent sheet members which are configured to be able to suppress the occurrence of irregular vortices, but the apparatus which is disclosed in PLT 1 does not cover a trough type solar thermal collector which is configured with a curved mirror like in the present invention, but covers a flat 3D shape solar cell module. Further, the above zigzag bent sheet members are arranged so as to reduce the wind noise. The apparatus differs from the present invention on these points as well. Solution to Problem

According to the aspect of the invention which is described in claim 1, there is provided a trough type solar thermal collector which uses a curved mirror to make a heat tube which is arranged in front of the curved mirror to collect sunlight and to heat a fluid which flows through the heat tube, the solar thermal collector provided with, at an outer edge of the curved mirror in a direction of change of curvature of the curved shape of the curved mirror, vortex control means for controlling a flow of vortices which forms at the outer edge.

That is, in the aspect of the invention which is described in claim 1, in particular, by providing the above such trough type solar thermal collector with vortex control means for controlling the flow of vortices which forms at an outer edge of the curved mirror in a direction of change of curvature of the curved shape of the curved mirror, it is possible to avoid damage to the curved mirror due to vortex-induced vibration even when a higher windspeed resistance specification is sought from the apparatus.

According to the aspect of the invention which is described in claim 2, there is provided the solar thermal collector according to claim 1 wherein the vortex control means is provided at least at one outer edge of two outer edges of the curved mirror in a direction of change of curvature of the curved shape of the curved mirror.

According to the aspect of the invention which is described in claim 3, there is provided the solar thermal collector according to claim 1 or claim 2 wherein the vortex control means is formed so as to be able to subdivide the vortices which form at an outer edge of the curved mirror in a direction of change of curvature of the curved shape of the curved mirror.

That is, in the aspect of the invention which is described in claim 3, by forming the vortex control means so as to be able to subdivide the vortices which form at an outer edge of the curved mirror in a direction of change of curvature of the curved shape of the curved mirror, it is possible to make the frequency of formation of vortices which form at the outer edge higher and increase the difference between the frequency of formation of vortices and the natural frequency of the solar thermal collector and it is possible to avoid damage to the reflecting mirror surface due to vortex-induced vibration.

According to the aspect of the invention which is described in claim 4, there is provided the solar thermal collector according to claim 3 wherein the vortex control means is formed so as to have a surface relief structure which is arranged along an outer edge of the curved mirror in a direction of change of curvature of the curved shape of the curved mirror and which is configured to be able to subdivide the vortices which form at the outer edge.

According to the aspect of the invention which is described in claim 5, there is provided the solar thermal collector according to claim 3 wherein the vortex control means is formed to have opening parts which open along an outer edge of the curved mirror in a direction of change of curvature of the curved shape of the curved mirror and which are configured to be able to subdivide the vortices which form at the outer edge.

According to the aspect of the invention which is described in claim 6, there is provided the solar thermal collector according to claim 5 wherein the opening parts which open along an outer edge of the curved mirror are defined using wires.

According to the aspect of the invention which is described in claim 7, there is provided the solar thermal collector according to claim 5 wherein the opening parts which open along an outer edge of the curved mirror are defined using sheet materials.

### Advantageous Effects

According to the aspects of the invention which are described in the claims, there is provided a trough type solar thermal collector which uses a curved mirror to make a heat tube which is arranged in front of the curved mirror collect sunlight and to heat a fluid which flows through the heat tube, wherein a vortex control means for controlling a flow of vortices which forms at an outer edge of the curved mirror in a direction of change of curvature of the curved shape of the curved mirror is provided. By doing this, the common effect is exhibited of enabling damage to the curved mirror due to vortex-induced vibration to be avoided even when higher windspeed resistant specifications are demanded from the apparatus.

### Brief Description of Drawings

FIG. 1 is an overall perspective view of an embodiment of a trough type solar thermal collector of the present invention.
FIG. 2 is a partial enlarged view of an outer edge of a curved mirror which is shown in FIG. 1.
FIG. 3 is an enlarged view of a surface relief structure which is provided at an outer edge of the curved mirror which is shown in FIG. 2.
FIG. 4 is an overall perspective view of another embodiment of the trough type solar thermal collector of the present invention.
FIG. 5 is a partial enlarged view of an outer edge of a curved mirror which is shown in FIG. 4.
FIG. 6 is an overall perspective view of another embodiment of the trough type solar thermal collector of the present invention.
FIG. 7 is a partial enlarged view of an outer edge of a curved mirror which is shown in FIG. 6.
FIG. 8 is an overall perspective view of another embodiment of the trough type solar thermal collector of the present invention.
FIG. 9 is a partial enlarged view of an outer edge of a curved mirror which is shown in FIG. 8.
FIG. 10 is an overall perspective view of another embodiment of the trough type solar thermal collector of the present invention.

### Description of Embodiments

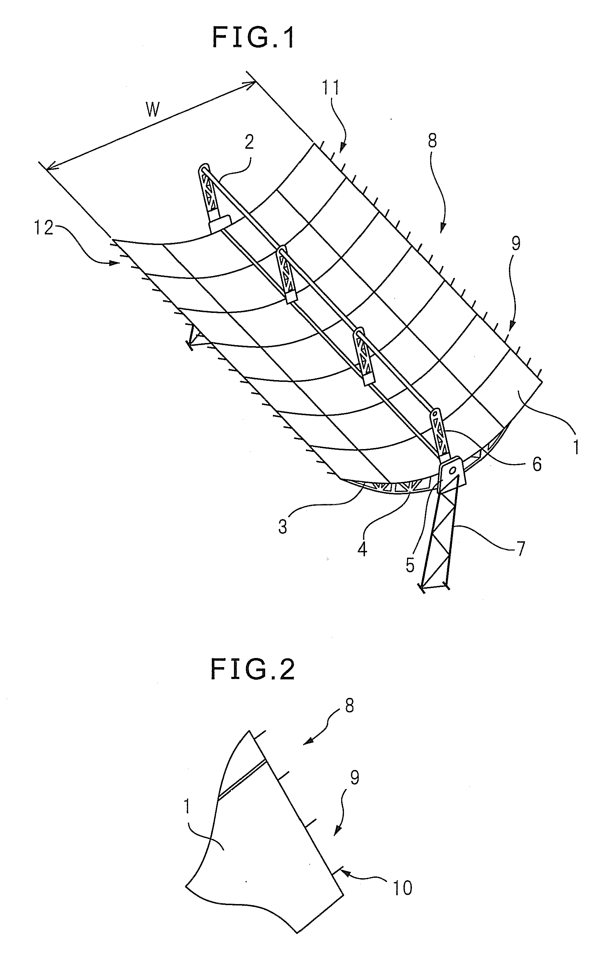

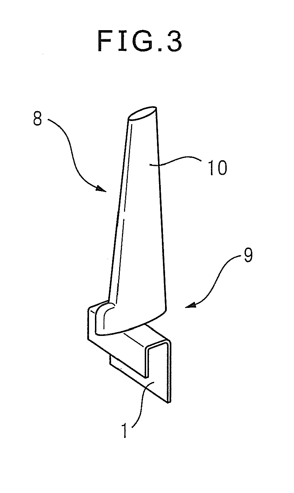

Below, using the attached drawings, embodiments of a trough type solar thermal collector according to the present invention will be explained. FIG. 1 is an overall perspective view of an embodiment of a trough type solar thermal collector of the present invention. FIG. 2 is a partial enlarged view of an outer edge of a curved mirror which is shown in FIG. 1. FIG. 3 is an enlarged view of a surface relief structure which is provided at an outer edge of the curved mirror which is shown in FIG. 2. In the figures from FIG. 1 to FIG. 3, 1 indicates a curved mirror, 2 a heat tube, 3 a support frame, 4 a backup structure, 5 a support tube, 6 a heat tube support, 7 a mount structure, 8 a vortex control means, 9 a surface relief structure, and 10 a projecting member.

The curved mirror which extends in the trough shape is configured as a light collecting reflecting mirror which collects sunlight at the focal line of the curved mirror. The trough shape extended curved mirror 1 is extended further to form a single light collecting reflecting mirror unit. The reflecting surface of the trough shape extended curved mirror 1 is, to improve the reflectance of solar heat, made using glass mirror panels in many plants. Further, in some plants, the method of treating a metal or heat resistant plastic by plating, vapor deposition, polishing, coating, or other method is used.

When using glass mirror panels as the curved mirror 1, flying rocks etc. may easily crack or break them. Based on this, in the present embodiment, the curved mirror 1 is formed by reflecting panels which are comprised of pliable metal sheets on the surfaces of which reflecting films are formed. The mirror surfaces in this case are, for example, formed by polishing the surfaces or attaching film mirrors, metal vapor deposited films, etc. Further, as the material of the reflecting panels, for example, iron or stainless steel or aluminum etc. may be used.

The support frame 3 is configured provided with an engagement surface which has a predetermined curved shape and is formed so as to support the curved mirror 1. According to the support frame 3 configured having such an engagement surface, by suitably arranging reflecting panels which were formed as flat sheets on the engagement surface of the support frame 3, it is possible to form a curved mirror 1 which has a predetermined curved shape. In this case, it is possible to eliminate the press forming or other treatment for forming the curved surface of the mirror itself.

In the present embodiment, the support frame 3 is formed by members which have a U-shaped cross-section for the purpose of providing the light weight or rigidity or workability which is sought. However, any cross-sectional shapes of members can be used so long as members which have cross-sectional shapes which give sufficient rigidity, strength, etc. for securing performance. Further, the engagement surface of the support frame 3 and the reflecting panels are assembled or joined by riveting, screwing, welding, bonding, or other suitable processes. Further, as the material of the support frame, for example, iron or stainless steel or aluminum etc. may be used.

The backup structure 4 is configured by being formed integrally with the support frame 3 so as to reinforce the support frame 3. Further, as the material of the backup structure 4, in the same way as the support frame 3, for example, iron or stainless steel or aluminum etc. may be used. The backup structure 4 in the present embodiment may also be formed by press forming metal sheets which are made thinner in advance for the purpose of providing the light weight or rigidity or workability etc. which is sought. The backup structure 4 and the support frame 3 are joined together in the present embodiment by screwing together the side surface parts of the support frame 3 other than the engagement surface and the side surface parts of the backup structure 4 at a plurality of locations. However, the backup structure 4 and the support frame 3 are not limited to being joined by screwing them together. They may also be joined by riveting or by welding, bonding, etc.

Further, the support frame 3 and the backup structure 4 are configured to work together so as to secure the curved surface of the curved mirror 1 at a predetermined precision by supporting the weight of the curved mirror 1 and perform the roles of giving sufficient strength and rigidity for the wind pressure and other external load.

The support tube 5 is configured as one which supports the backup structure 4 and supports the support frame 3 which is joined integrally with the backup structure 4 and the reflecting panels which are joined to the support frame 3. Further, the support tube 5 is coupled with a mount structure 7 which is arranged between the installation surface for installing the trough type solar thermal collector and the curved mirror support structure and supports the curved mirror support structure. As the material of the support tube 5, in the same way as the support frame 3 and the backup structure 4, for example, iron or stainless steel or aluminum etc. may be used.

In this regard, as stated earlier, in recent years various environmental initiatives have been advanced. For realistic commercialization of the above such trough type solar thermal collectors, much higher performance is being sought in the windspeed resistance specifications etc. of such apparatuses compared with the prior art. Along with this, while damage of the curved mirror due to the above-mentioned vortex-induced vibration had never been considered a problem in past windspeed resistance specifications, a need has arisen for taking sufficient action under the high windspeed resistance conditions of the high performance specifications sought. Due to this, there has been a desire to provide vortex control means which are able to control the flow of vortices which form at the top and bottom edges in the direction of change of curvature of the curved shape of the curved mirror.

To deal with this, in the present invention, there is provided a trough type solar thermal collector which uses a curved mirror to make a heat tube which is arranged in front of the curved mirror collect sunlight and to heat a fluid which flows through the heat tube, wherein a vortex control means for controlling the flow of vortices which are formed at an outer edge of the curved mirror in a direction of change of curvature of the curved shape of the curved mirror is arranged to enable damage to the curved mirror due to vortex-induced vibration to be avoided even when a higher windspeed resistance specification is sought from the apparatus.

In a trough type solar thermal collector of one embodiment of the present invention which is shown in FIG. 1 to FIG. 3, the vortex control means 8 for controlling the flow of vortices which are formed at an outer edge of the curved mirror in a direction of change of curvature of the curved shape of the curved mirror 1 is configured by projecting members 10. The projecting members 10 are configured and arranged so as to give, at the outer edge of the curved mirror in the direction of change of curvature of the curved shape of the curved mirror 1, a surface relief structure 9 which is arranged along the outer edge and which is configured to subdivide the vortices which form at the outer edge. By providing the surface relief structure 9 which is formed by such projecting members 10 to configure the vortex control means 8, it is possible to make the frequency of formation of vortices which form at the outer edge of the curved mirror in the direction of change of curvature of the curved surface of the curved mirror 1 higher and increase the difference between the frequency of formation of vortices and the natural frequency of the solar thermal collector and it is possible to avoid damage to the reflecting mirror surface due to vortex-induced vibration.

The specific form of the surface relief structure 9 which is formed by the projecting members 10 on an outer edge of the curved mirror 1 is determined so as to satisfy the desired windspeed resistance and other specifications based on wind tunnel tests and other evaluation tests and analytical evaluations etc. The shape of the projecting members 10 in the present embodiment is one which is formed by a fin-shaped plate member, but the invention is not limited to this. For example, it may also be formed into a conical shape. Further, even when formed into a conical shape, it is sufficient that the above outer edge of the curved mirror be given a surface relief structure 9. There is no particularly need for the front ends to be formed sharp. They may also be formed rounded.

Further, regarding the height and pitch of the surface relief structure 9, in the present embodiment, based on in-depth research of the applicant, the height of the surface relief structure 9 is preferably made a height of 0.5% or more of the opening width (W) of the curved mirror 1, while the pitch of the surface relief shapes is preferably made a pitch of up to 10 times the height of the surface relief shapes. However, the height and pitch of the surface relief structure 9 are not limited to these in view of the fact that the optimal configuration will differ depending on the windspeed resistance specification and other specific specifications. Further, in the present embodiment, the vortex control means 8 is made one which is provided at both the top side outer edge and bottom side outer edge of the curved mirror in the direction of change of curvature of the curved surface of the curved mirror 1, but the invention is not limited to this. It may also be configured so that the means is provided at either one of the top side outer edge 11 and bottom side outer edge 12 of the curved mirror 1.

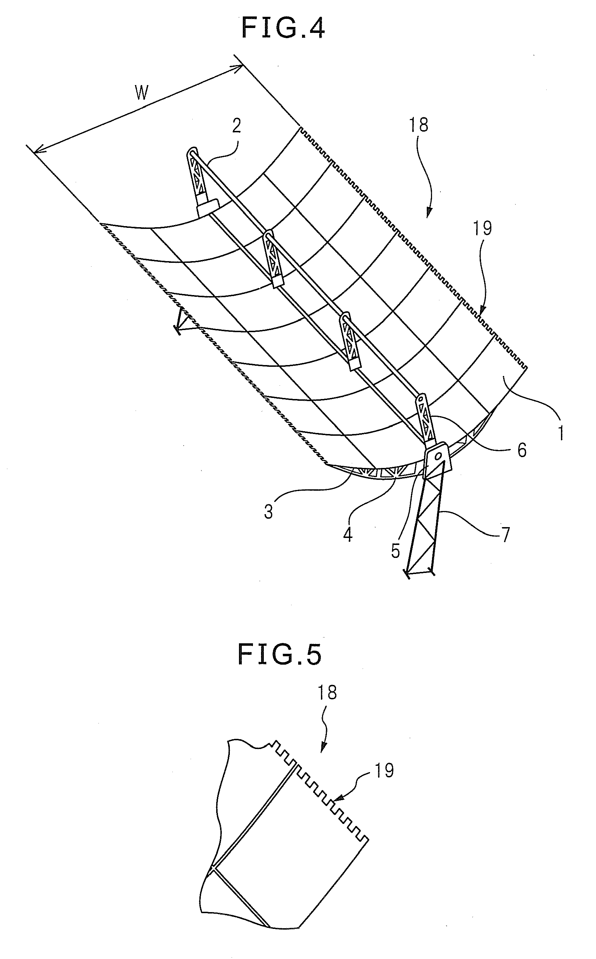

FIG. 4 is an overall perspective view of another embodiment of a trough type solar thermal collector of the present invention. FIG. 5 is a partial enlarged view of the outer edge of a curved mirror which is shown in FIG. 4. In the figures of FIG. 4 and FIG. 5, 18 indicates a vortex control means and 19 indicates a surface relief structure. Further, in the components which are shown in FIG. 4 and FIG. 5, components which are similar in configuration to those shown in FIG. 1 to FIG. 3 are assigned the same reference numerals.

In the trough type solar thermal collector of the other embodiment of the present invention which is shown in FIG. 4 and FIG. 5, the vortex control means 18 for controlling the flow of vortices which is formed at an outer edge of the curved mirror in the direction of change of curvature of the curved surface of the curved mirror 1 is configured having a surface relief structure 19 which is formed by directly forming surface relief shapes on the outer edge of the curved mirror 1. The surface relief structure 19 in the present embodiment, in the same way as the embodiment which is shown in FIG. 1 to FIG. 3, is arranged configured so as to be able to subdivide the vortices which form at the outer edge of the curved mirror 1. Due to this, it is possible to make the frequency of formation of vortices which form higher and increase the difference between the frequency of formation of vortices and the natural frequency of the solar thermal collector and it is possible to avoid damage to the curved mirror 1 due to vortex-induced vibration.

The specific form of a surface relief structure 19 which is formed by directly forming surface relief shapes at an outer edge of the curved mirror 1 is determined to satisfy the desired windspeed resistance and other specifications based on wind tunnel tests and other evaluation tests and analytical evaluations etc. In the present embodiment, the surface relief shapes of a surface relief structure are formed as rectangular shapes, but the invention is not limited to this. It is sufficient that they be of shapes which can subdivide the vortices which form at an outer edge of the curved mirror 1. For example, the edges of the surface relief shapes need not be sharp, but may also be rounded in shape.

Further, regarding the height and pitch of the surface relief structure 19, in the present embodiment, in the same way as the embodiment which is shown from FIG. 1 to FIG. 3, the height of the surface relief structure is preferably made a height of 0.5% or more of the opening width (W) of the curved mirror, while the pitch of the surface relief shapes is preferably made a pitch of up to 10 times the height of the surface relief shapes. However, the height and pitch of the surface relief structure 19 are not limited to these in view of the fact that the optimal configuration will differ depending on the windspeed resistance specification and other specific specifications. Further, in the present embodiment, the vortex control means 18 is made one which is provided at both the top side outer edge and bottom side outer edge of the curved mirror in the direction of change of curvature of the curved surface of the curved mirror 1, but the invention is not limited to this. It may also be configured so that the means is provided at either one of the top side outer edge and bottom side outer edge of the curved mirror 1.

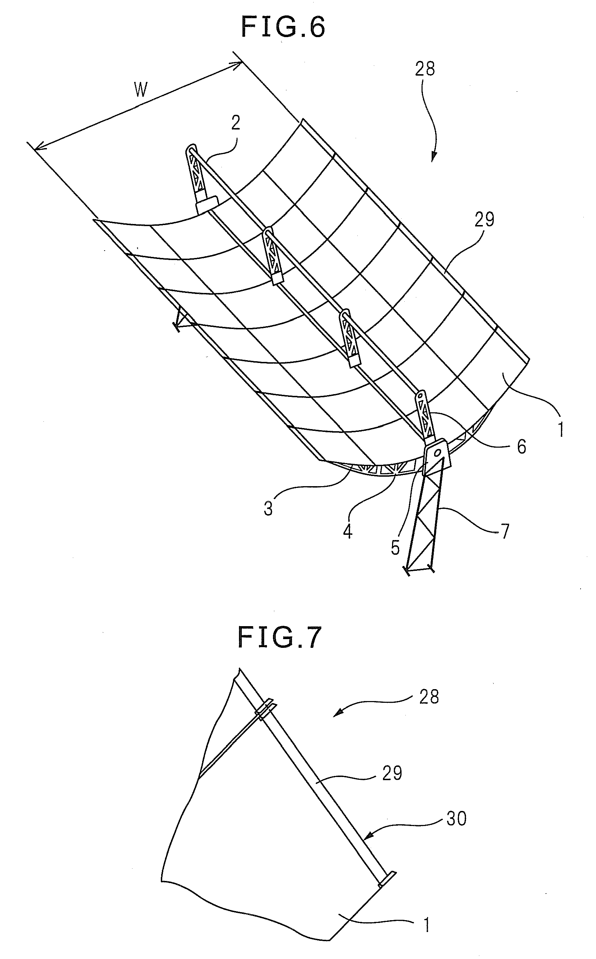

FIG. 6 is an overall perspective view of another embodiment of the trough type solar thermal collector of the present invention. FIG. 7 is a partial enlarged view of an outer edge of a curved mirror which is shown in FIG. 6. In the figures of FIG. 6 and FIG. 7, 28 indicates a vortex control means, 29 an opening part, and 30 a wire. Further, in the components which are shown in FIG. 6 and FIG. 7, components which are similar in configuration to those which are shown in FIG. 1 to FIG. 3 are assigned the same reference numerals.

In the trough type solar thermal collector of the other embodiment of the present invention which is shown in FIG. 6 and FIG. 7, the vortex control means 28 for controlling the flow of vortices which is formed at an outer edge of the curved mirror in the direction of change of curvature of the curved surface of the curved mirror 1 is formed by having opening parts 29 which open along an outer edge of the curved mirror in the direction of change of curvature of the curved surface of the curved mirror 1 and which are configured to be able to subdivide the vortices which form at the outer edge. Further, in the present embodiment, the opening parts 29 which open along an outer edge of the curved mirror 1 are defined using wires 30. By using such opening parts 29 to configure the vortex control means 28, it is possible to make the frequency of formation of vortices which form at an outer edge of the curved mirror in the direction of change of the curvature of the curved surface of the curved mirror 1 higher and increase the difference between the frequency of formation of vortices and the natural frequency of the solar thermal collector and it is possible to avoid damage to the reflecting mirror surface due to vortex-induced vibration.

The specific form of the opening parts 29 which are defined by the wires 30 at an outer edge of the curved mirror 1 is determined so as to satisfy the desired windspeed resistance and other specifications based on wind tunnel tests and other evaluation tests and analytical evaluations etc. Further, regarding the wires which are used, from the viewpoint of subdividing the vortices which are formed, ones of greater surface roughness have greater effects. In the present embodiment, wires which are twisted together or wires which are braided together are used. However, even wires with smooth surfaces can subdivide vortices which are formed. The wires are not limited to the twisted together or bundled wires which are used in the present embodiment.

Further, regarding the positions at which the wires 30 are arranged and their thicknesses, in the present embodiment, based on in-depth research by the applicant, regarding the arrangement of the wires 30, preferably the wires are arranged at positions parallel to but separated from an outer edge of the curved mirror 1 by a distance of 0.5% to 10% of the opening width (W) of the curved mirror 1. Further, regarding the thickness of the wires, preferably it is made a thickness of 0.01% to 5% of the opening width (W) of the curved mirror 1. However, the arrangement and thickness of the wires 30 are not limited to this in view of the fact that the optimal configuration will differ depending on the windspeed resistance specification and other specific specifications. Further, in the present embodiment, the vortex control means 28 is provided at both of the top side outer edge and bottom side outer edge in the direction of change of curvature of the curved surface of the curved mirror 1, but the invention is not limited to this. It may also be configured so that the means is provided at either one of the top side outer edge and bottom side outer edge of the curved mirror 1.

Further, in the present embodiment, the opening parts 29 which open along an outer edge of the curved mirror 1 and which are configured so as to be able to subdivide the vortices which form at the outer edge are defined by wires 30, but instead of wires 30, it is also possible to use sheet materials to form the opening parts 29. Further, the outer edges of the curved mirror 1 may be directly drilled into so as to form the opening parts 29.

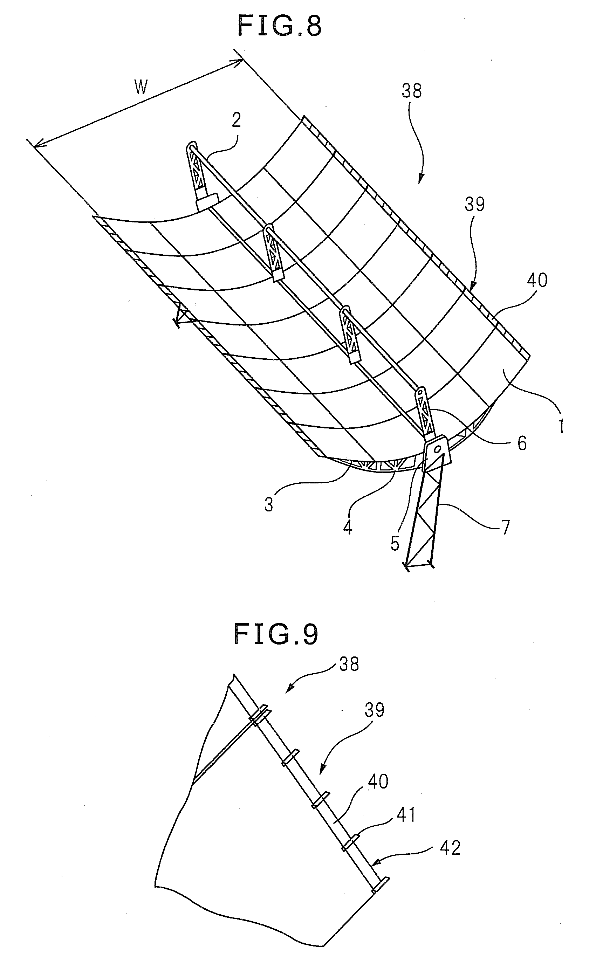

FIG. 8 is an overall perspective view of another embodiment of a trough type solar thermal collector of the present invention. FIG. 9 is a partial enlarged view of an outer edge of a curved mirror which is shown in FIG. 8. In the figures of FIG. 8 and FIG. 9, 38 indicates a vortex control means, 39 a relief structure, 40 an opening part, 41 a projecting member, and 42 a wire. Further, in the components which are shown in FIG. 8 and FIG. 9, components which are similar in configuration to those which are shown in FIG. 1 to FIG. 3 are assigned the same reference numerals.

In the trough type solar thermal collector of the embodiment of the present invention which is shown in FIG. 8 to FIG. 9, the vortex control means 38 for controlling the flow of vortices which is formed at an outer edge of the curved mirror in a direction of change of curvature of the curved shape of the curved mirror 1 is configured by a combination of a surface relief structure 39 which is formed at an outer edge of the curved mirror 1 by projecting members 41 similar to the projecting members which are explained in the embodiment which is shown in FIG. 1 to FIG. 3 and opening parts 40 which are formed along an outer edge of the curved mirror 1 by wires 42 similar to the wires which are explained in the embodiment which is shown in FIG. 6 and FIG. 7. By this, it is possible to more reliably subdivide the vortices which form at an outer edge of the curved mirror 1, make the frequency of formation of vortices which form at the outer edge higher to increase the difference between the frequency of formation of vortices and the natural frequency of the solar thermal collector, and possible to avoid damage to the curved mirror 1 due to vortex-induced vibration. Further, in the present embodiment, the vortex control means 38 was provided at both of the top side outer edge and bottom side outer edge of the curved mirror in the direction of change of curvature of the curved surface of the curved mirror 1, but the invention is not limited to this. It may also be configured so that the means is provided at either one of the outer edge of the top side outer edge and the bottom side outer edge of the curved mirror 1.

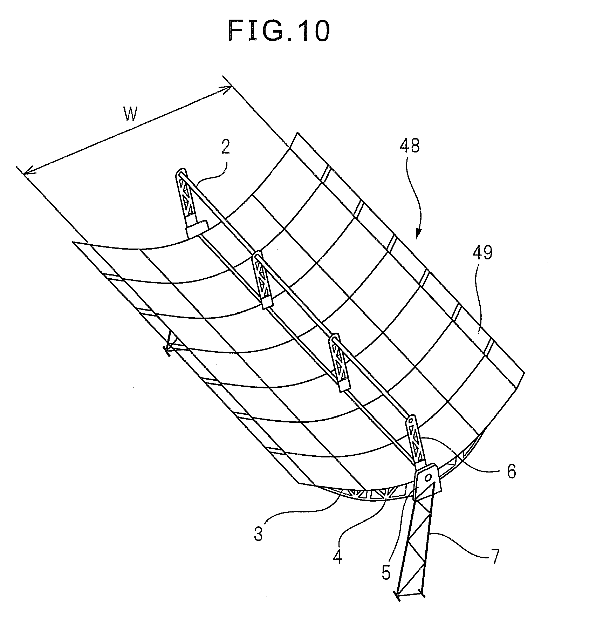

FIG. 10 is an overall perspective view of another embodiment of a trough type solar thermal collector of the present invention. In FIG. 10, 48 indicates a vortex control means, while 49 indicates a cloth component. Further, in the components which are shown in FIG. 10, components which are similar in configurations to those which are shown from FIG. 1 to FIG. 3 are assigned the same reference numerals.

In the trough type solar thermal collector of the other embodiment of the present invention which is shown in FIG. 10, the vortex control means 48 for controlling the flow of vortices which forms at an outer edge of the curved mirror 1 in the direction of change of curvature of the curved surface of the curved mirror 1 is configured to have a cloth component 49 which is arranged at the outer edge of the curved mirror 1. The cloth component 49 is configured to be arranged so as to flutter along the flow of air at the outer edge of the curved mirror 1 when the curved mirror 1 is placed in a flow of air. It straightens the flow of the vortices which form at an outer edge of the curved mirror 1, suppresses the formation of vortices which form at the the outer edge, and enables damage of the curved mirror 1 due to vortex-induced vibration to be avoided.

Above, according to the present invention, it is possible to provide a trough type solar thermal collector which uses a curved mirror to make a heat tube which is arranged in front of the curved mirror collect sunlight and to heat a fluid which flows through the heat tube and which is provided with a vortex control means which can control the flow of vortices which form at an outer edge of a curved mirror in the direction of change of curvature of the curved surface, so even when a higher windspeed resistance specification is demanded from the apparatus, damage to the curved mirror due to vortex-induced vibration can be avoided. Reference Signs List

- 1: curved mirror
- 2: heat tube
- 3: support frame
- 4: backup structure
- 5: support tube
- 6: heat tube support
- 7: mount structure
- 8: vortex control means

## Claims

1. A trough type solar thermal collector which uses a curved mirror to make a heat tube which is arranged in front of said curved mirror collect sunlight and to heat a fluid which flows through said heat tube, wherein
said solar thermal collector is provided with, at an outer edge of said curved mirror in a direction of change of curvature of the curved shape of said curved mirror, vortex control means for controlling a flow of vortices which forms at the outer edge.

2. The solar thermal collector according to claim 1, wherein said vortex control means is provided at least at one outer edge of two outer edges of said curved mirror in a direction of change of curvature of the curved shape of said curved mirror.

3. The solar thermal collector according to claim 1 or claim 2, wherein said vortex control means is formed so as to be able to subdivide the vortices which form at an outer edge of said curved mirror in a direction of change of curvature of the curved shape of said curved mirror.

4. The solar thermal collector according to claim 3, wherein said vortex control means is formed so as to have a surface relief structure which is arranged along an outer edge of said curved mirror in a direction of change of curvature of the curved shape of said curved mirror and which is configured to be able to subdivide the vortices which form at the outer edge.

5. The solar thermal collector according to claim 3, wherein said vortex control means is formed to have opening parts which open along an outer edge of said curved mirror in a direction of change of curvature of the curved shape of said curved mirror and which are configured to be able to subdivide the vortices which form at the outer edge.

6. The solar thermal collector according to claim 5, wherein the opening parts which open along an outer edge of said curved mirror are defined using wires.

7. The solar thermal collector according to claim 5, wherein the opening parts which open along an outer edge of said curved mirror are defined using sheet materials.
